# EUROPEAN PATENT SPECIFICATION

(11) **EP 1 783 804 B1**
(45) Date of publication and mention of the grant of the patent: **24.02.2010**
(21) Application number: 06123687.3
(22) Date of filing: 08.11.2006
(51) Int. Cl.: H01J 17/49, H01J 1/72

(54) **Plasma display panel**
Plasmaanzeigetafel
Panneau d'affichage plasma

(30) Priority: 08.11.2005 KR 20050106391
(43) Date of publication of application: 09.05.2007
(73) Proprietor: Samsung SDI Co., Ltd., Gyeonggi-do (KR)
(72) Inventor: Son, Seung-Hyun, Yeongtong-gu Suwon-si Gyeonggi-do (KR); Jang, Sang-Hun, Yeongtong-gu Suwon-si Gyeonggi-do (KR)
(74) Representative: Walaski, Jan Filip

(56) References cited:
- WO-A-2005/051045
- JP-A- 8 130 090
- KR-A- 20020 083 405
- US-A- 3 686 686
- US-A- 4 429 303
- US-A1- 2002 063 525

## Description

The present invention relates to a plasma display panel (PDP), and more particularly but not exclusively to a PDP in which a predetermined voltage is applied to electrodes disposed in a sealed space to cause a discharge in the state where a gas is charged between the electrodes and a phosphor layer is excited by UV rays produced during the discharge whereby an image is formed.

In plasma display panels (PDP), brightness and luminous efficiency are main factors which determine the performance of a PDP. In order to improve luminous efficiency and brightness of the PDP, a surface area of a phosphor layer can be increased. However, there is a limitation in increasing the surface area of the phosphor layer due to a structure of the PDP.

In addition, in order to improve brightness of the PDP, a discharge voltage applied to electrodes can be increased. However, when the discharge voltage is higher than a predetermined voltage, brightness is not improved any more or an increase ratio is reduced, whereby luminous efficiency of the PDP is lowered.

In particular, a PDP having pixels of 640 x 480 and 800 x 600 has been used. However, as a PDP having pixels of 1940 x 1035 has been recently developed, a more need for improving brightness and luminous efficiency of the PDP is required. That is, as the PDP has been made highly precise and fine, the size of discharge cells of the PDP is reduced and a surface area of a phosphor layer applied in the discharge cells is also reduced. As the surface area of the phosphor layer is reduced, the amount of visible rays emitted from the phosphor layer is reduced, brightness of the PDP is lowered, whereby luminous efficiency of the PDP is lowered.

The present invention provides a plasma display panel (PDP) that improves brightness.

The present invention also provides a PDP that improves luminous efficiency without a need for increasing intensity of a voltage for a discharge.

An example of a plasma display panel according to the preamble of claim 1 is disclosed in EP-A-1 361 593.

US2002/0063525 discloses a plasma switched organic electroluminescent display. US 4,429,303 discloses a colour plasma display device using electroluminescent techniques.

According to the present invention, there is provided a plasma display panel according to claim 1.

The above and other aspects and advantages of the present invention will become more apparent by describing in detail exemplary embodiments thereof with reference to the attached drawings in which:
Figure 1 is an exploded perspective view of a plasma display panel (PDP) according to an embodiment of the present invention;
Figure 2 is a cross-sectional view taken along line II-II of Figure 1;
Figures 3A and 3B are cross-sectional views of a structure of the PDP illustrated in Figure 1 in which light is produced from an electroluminescent (EL) layer during a sustain discharge;
Figure 4 is a cross-sectional view of a structure of quantum dots as an example of elements for the EL layer of the PDP illustrated in Figure 1;
Figure 5 is a plan view of a structure of electrodes and the EL layer of the PDP illustrated in Figure 1;
Figure 6 is an exploded perspective view of a PDP according to another embodiment of the present invention; and
Figure 7 is a cross-sectional view taken along line VII-VII of Figure 6.

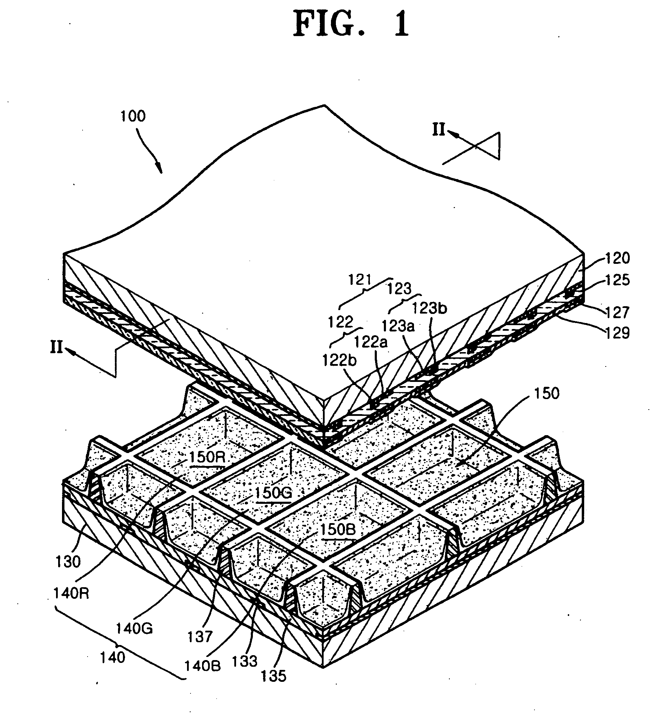

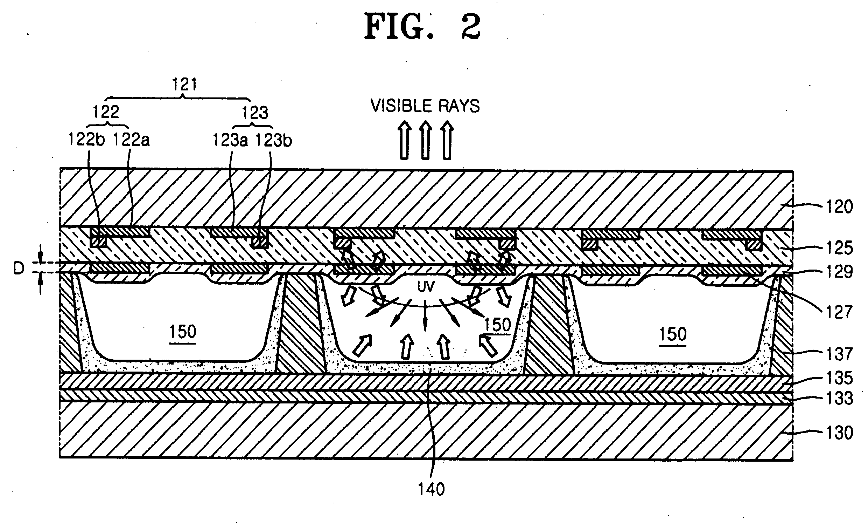

Figure 1 is an exploded perspective view of a plasma display panel (PDP) according to an embodiment of the present invention, and Figure 2 is a cross-sectional view taken along line II-II of Figure 1. Referring to Figures 1 and 2, a PDP 100 includes a front substrate 120, a rear substrate 130, a plurality of barrier ribs 137, a plurality of sustain discharge electrode pairs 121, a plurality of electroluminescent (EL) layers 127, a discharge gas (not shown), and a plurality of phosphor layers 140.

The front substrate 120 is parallel to the rear substrate 130.

In general, visible rays are transmitted through the front substrate 120 to provide a viewable image.. Alternatively, in another example, visible rays can be transmitted through the rear substrate 130 to provide a viewable image.

One or more barrier ribs 137 are formed between the front substrate 120 and the rear substrate 130. The barrier ribs 137 define discharge cells 150 between the front substrate 120 and the rear substrate 130, and prevent cross-talk of charged particles between adjacent cells.

The discharge cells 150 are arranged in groups. Each group constitutes one unit pixel. In general, each group of discharge cells 150 includes a red discharge cell 150R, green discharge cell 150G and blue discharge cell 150B.

The phosphor layers 140 are formed in the discharge cells 150. In general, the phosphor layers 140 may be disposed on side surfaces of the barrier ribs 137 and on a top surface of a rear dielectric layer 135 in which the barrier ribs 137 are not disposed. In this case, for one pixel, the phosphor layers 140 may include red phosphor layers 140R formed in the red discharge cells 150R, green phosphor layers 140G formed in the green discharge cells 150G, and blue phosphor layers 140B formed in the blue discharge cells 150B.

The sustain discharge electrode pairs 121 and address electrodes 133 can be formed in the discharge cells 150. The sustain discharge electrode pairs 121 include X electrodes 122 and Y electrodes 123 in each discharge cell 150 and can cause a sustain discharge. At this time, the X electrodes 122 and the Y electrodes 123 include transparent electrodes 122a and 123a and bus electrodes 122b and 123b, respectively, which can be formed to be parallel on a rear surface of the front substrate 120 in one direction.

Address electrodes 133 can be disposed to correspond to each of the sustain discharge electrode pairs 121. The address electrodes 133 can be formed on a front surface of the rear substrate 130 to cross the X and Y electrodes 122 and 123 and filled by the rear dielectric layer 135.

The X and Y electrodes 122 and 123 are covered by a front dielectric layer 125.

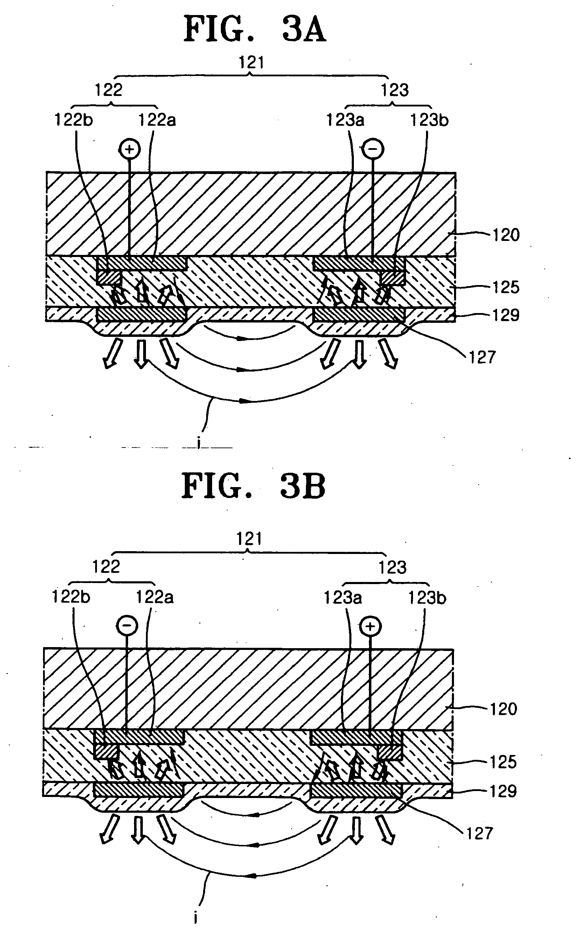

The EL layers 127 are formed on a rear surface of the front dielectric layer 125. The EL layers 127 are formed on a sustain discharge path between the X electrodes 122 and the Y electrodes 123, as shown in Figure 3A, and electrons pass through the EL layers 127 so that light is produced. That is, if a sustain discharge between the X electrodes 122 and the Y electrodes 123 occurs in the discharge cells 150 to be turned on, charges move along the sustain discharge path in a discharge space, the discharge space in the discharge cells 150 in which the X electrodes 122 and the Y electrodes 123 are disposed has an electrically low resistance during the sustain charge, and a current i flows along the sustain discharge path.

Referring to Figures 3A and 3B, polarities of the X electrodes 122 and the Y electrodes 123 are alternately changed during a sustain period. Thus, charges move on the sustain discharge path from the X electrodes 122 to the Y electrodes 123 or from the Y electrodes 123 to the X electrodes 122, collide with the discharge gas, emit UV rays, the emitted UV rays collide with the phosphor layers 140, and visible rays are produced from the phosphor layers 140. Furthermore, if the EL layers 127 are located on the sustain discharge path in the discharge cells to be turned on, the current i passes through the EL layers 127 and thus, electrons move in a direction opposite to the current i. At this time, electron transfer or tunnelling occurs in the EL layers 127 so that visible light is produced. Thus, light produced from the EL layers 127 is combined with visible rays emitted from the phosphor layers 140 and emitted through the front substrate 120 so that the brightness and luminous efficiency of the PDP 100 are improved.

The EL layers 127 may comprise stripes corresponding to each of the X electrodes 122 and the Y electrodes 123 and two EL layers 127 may be disposed in each discharge cell 150. That is, the rear surface of the front dielectric layer 125 located on the sustain discharge path may correspond to each of the X electrodes 122 and the Y electrodes 123. Thus, if the EL layers 127 are disposed in each of the X electrodes 122 and the Y electrodes 123, light may be emitted from both sides of the discharge cells 150 so that brightness of the PDP 100 is improved and an emission location does not lean to one side of the discharge cells 150.

The EL layers 127 and the front dielectric layer 125 in which the EL layers 127 are not formed, may be covered with a protective layer 129. The protective layer 129 is not an essential element and but prevents charged particles from colliding with the EL layers 127 and the front dielectric layer 125, and the EL layers 127 and the front dielectric layer 125 from being damaged and emitting a large amount of secondary electrons during a discharge.

Referring to Figures 1 and 2, a discharge gas (not shown) is filled in the discharge cells 150. A penning mixture such as Xe-Ne, Xe-He, or Xe-Ne-He is used as the discharge gas. Xe is used as a main discharge gas because Xe is an inert gas chemically stabilized, is not dissociated by a discharge and has a large atomic number, an excitation voltage that is reduced and the wavelength of its emitted light is long. He or Ne is used as a buffer gas because a voltage reduction effect caused by penning due to Xe and a sputtering effect caused by a high pressure are reduced. Examples of the main discharge gas may include a rare gas such as Kr.

The front substrate 120 and the rear substrate 130 are manufactured of a material having excellent light transmission, such as glass.

The phosphor layers 140 can be classified into red phosphor layers 140R, green phosphor layers 140G, and blue phosphor layers 140B according to color of visible rays. The red phosphor layers 140R include phosphor such as Y(V,P)O₄:Eu, the green phosphor layers 140G include phosphor such as Zn₂SiO₄:Mn, and the blue phosphor layers 140B include phosphor such as BAM:Eu.

The red discharge cells 150R in which the red phosphor layers 140R are disposed serve as red subpixels, the green discharge cells 150G in which the green phosphor layers 140G are disposed serve as green subpixels, and the blue discharge cells 150B in which the blue phosphor layers 140B are disposed serve as blue subpixels. The red subpixels, the green subpixels, and the blue subpixels constitute one group to form a unit pixel, thereby representing a variable range of colors according to combination of R, G, and B colors from the subpixels.

The EL layers 127 may be formed of an inorganic EL material. The inorganic EL material is an inorganic material, like a light emitting layer in inorganic EL. If voltages having different relative polarities are applied to opposite sides of the inorganic EL material, electron transfer occurs in the inorganic EL material and light is produced. Thus, if voltages are applied between the sustain discharge electrode pairs 121, light is produced from the inorganic EL material, and the light is combined with visible rays produced from the phosphor layers 140 and emitted so that brightness and luminous efficiency of the PDP 100 are improved.

More specifically, in order to drive the PDP 100, an address discharge and a sustain discharge occur in the discharge cells 150. As an example thereof, an address voltage is applied between the address electrodes 133 and the Y electrodes 123 so that an address discharge occurs. Discharge cells 150 in which a sustain discharge will occur as a result of the address discharge are selected. After that, if an AC sustain discharge voltage is applied between the X electrodes 123 and the Y electrodes 122 of the selected discharge cells 150, a sustain discharge between the X electrodes 122 and the Y electrodes 123 occurs. The energy level of a discharge gas excited by the sustain discharge is reduced and UV rays are emitted. The UV rays excite the phosphor layers 140 applied in the discharge cells 150. The energy level of the excited phosphor layers 140 is reduced, visible rays are emitted, and the emitted visible rays realize an image.

In this case, a sustain discharge voltage of 150-180 V is alternately applied between the X electrodes 122 and the Y electrodes 123 during a sustain period. In a discharge space in the discharge cells 150 to be turned on, charges having opposite signs to the applied sustain discharge voltage move in the discharge space and onto the rear dielectric layer 135 corresponding to the X electrodes 122 and the Y electrodes 123. Accordingly, if the sustain discharge voltage is applied to the X electrodes 122 and the Y electrodes 123, current flows from the X electrodes 122 to the Y electrodes 123 or from the Y electrodes 123 to the X electrodes 122 along the front dielectric layer 125 and the discharge space in the discharge cells 150.

Thus, the EL layers 127 including an inorganic EL material are formed on the rear surface of the front dielectric layer 125 whereby they are located on the discharge path between the front dielectric layer 125 and the discharge space.

Thus, when the sustain discharge occurs in the discharge cells 150 to be turned on, voltages having opposite polarities are applied to the front and rear surfaces of the EL layers 127 formed of the inorganic EL material so that the inorganic EL material is emitted. Simultaneously, visible rays caused by collision with UV rays are also produced from the phosphor layers 140 of the discharge cells 150 to be turned on. Thus, the light emitted from the inorganic EL layers 127 is combined with the visible rays produced from the phosphor layers 140 and emitted through the front substrate 120 so that the amount of light emitted from the discharge cells 150 is increased and brightness of the PDP 100 is improved.

In contrast, current does not flow in the discharge cells 150 that are turned off, so that light is not emitted from the inorganic EL material of cells in the off state.

When the sustain discharge voltage is applied between the X electrodes 122 and the Y electrodes 123, no additional voltage needs be applied between the X electrodes 122 and the Y electrodes 123 in order to produce light emission from the EL material 127. Thus, the brightness of the PDP 100 can be improved by applying only the usual sustain discharge voltage between the X electrodes 122 and the Y electrodes 123 so that luminous efficiency of the PDP 100 is improved.

In other words, the sustain discharge voltage can be 150-180 V. Thus, a potential difference of 150-180 V between the inorganic EL layers 127 occurs, the inorganic EL layers 127 may emit light.

In this case, the inorganic EL material may be at least one material selected from the group consisting of ZnS:Mn, ZnS:Tb, SrS:Ce, Ca₂S₄:Ce, SrS:Cu, SrS:Ag, CaS:Pb, and BaAl₂:Eu, for example, ZnS:Mn, ZnS:Tb which can produce a brightness of 4000-5000 cd/m².

The thickness D of the EL layers 127 may be 500-5000 Å. This is because, when the thickness D of the EL layers 127 is greater than 5000 Å, transmission is lowered and when the thickness D of the EL layers 127 is less than 500 Å, insufficient light is emitted by the inorganic EL material.

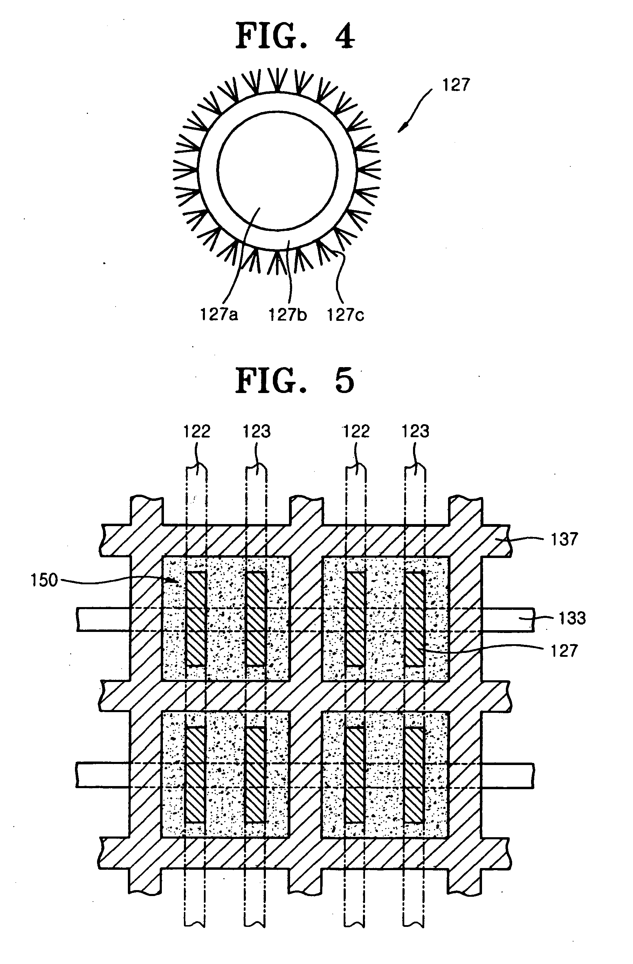

The EL layers 127 may be formed of quantum dots. Theoretical quantum efficiency of the quantum dots can be improved up to 100% and electrons can be excited even at a low voltage so that luminous efficiency can be improved. In addition, since a light emitting layer can be formed using a printing process, it is advantageous to make a display apparatus bigger. As shown in Figure 4, the quantum dots 127 may include a core 127a formed of CdSe, a shell 127b formed of ZnS and surrounding the core 127a, and caps 127c formed of trioctylphosphine oxide (TOPO) and disposed outside the shell 127b.

The EL layers 127 formed of the quantum dots may be a single layer structure or a multi-layer structure, although it may be advantageous for the EL layers 127 to be a single layer structure for the purpose of luminous efficiency.

The EL layers 127 are located on a path in which visible rays through which the visible rays produced from the phosphor layers 140 in the discharge space pass are emitted. Thus, the EL layers 127 may be formed of a light transmission material that transmit visible rays.

In this case, the EL layers 127 may extend as a continuous stripe in the same direction as the X electrodes 122 and the Y electrodes 123, which is advantageous for manufacture. Unlike this, as shown in Figure 5, the EL layers 127 may be formed as discontinuous regions in each discharge cell 150. In this case, the possibility that light produced from the EL layers 127 passes through the barrier ribs 137 and cross-talk occurs is reduced.

The EL layers 127 can applied to a transmitted type PDP as well as the reflective type PDP.

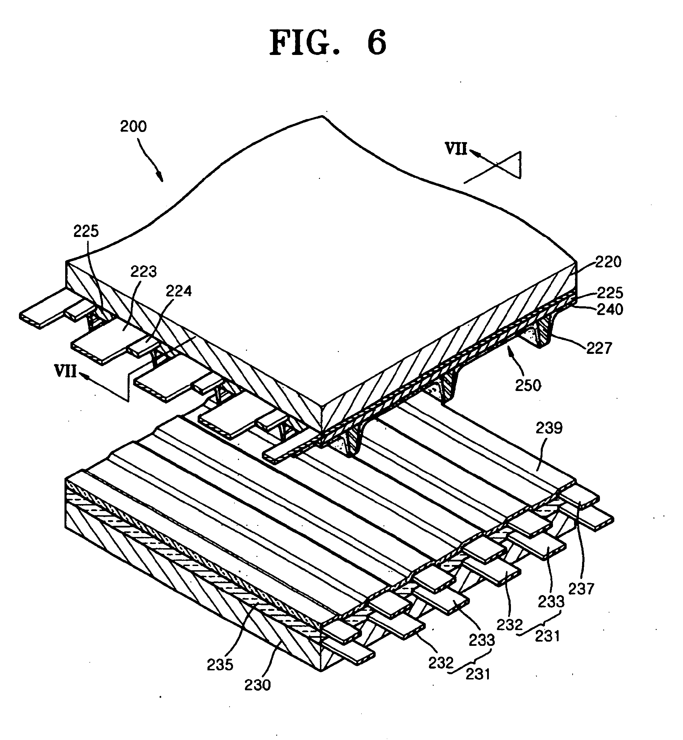

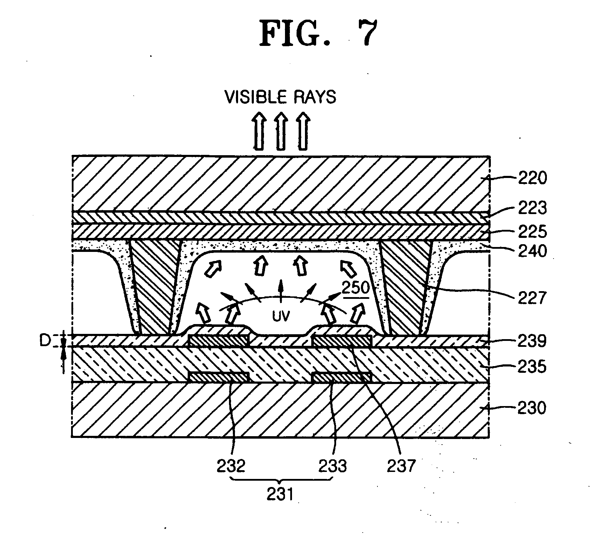

Figure 6 is an exploded perspective view of a PDP according to another embodiment of the present invention, and Figure 7 is a cross-sectional view taken along line VII-VII of Figure 6.

Referring to Figures 6 and 7, a PDP 200 is a transmitted type PDP. The PDP 200 includes a rear substrate 230 and a front substrate 220, which oppose each other. The rear substrate 230 and the front substrate 220 are separated from each other by a predetermined gap and form a discharge space therebetween, filled with a discharge gas as previously described with reference to Figures 1.

A glass substrate may be used as the rear substrate 230, and a plurality of sustain discharge electrode pairs 231 is formed on a top surface of the rear substrate 230 and extends in one direction. The sustain discharge electrode pairs 231 are disposed in such a manner that a pair of X electrodes 232 and Y electrodes 233 is disposed in each discharge cell 250. The sustain discharge electrode pairs 231 are covered by the rear dielectric layer 235 formed on a front surface of the rear substrate 230. The rear dielectric layer 235 can be formed by applying a dielectric material on the front surface of the rear substrate 230 to a thickness of about 15-40 µm.

A plurality of EL layers 237 is formed on the front surface of the rear dielectric layer 235. The EL layers 237 may be formed of an emission material when a sustain discharge voltage is applied between the X electrodes 232 and the Y electrodes 233. In addition, the EL layers 237 are formed on a sustain discharge path between the X electrodes 232 and the Y electrodes 233, and in particular, two EL layers 237 can be formed in each discharge cell 250 to correspond to the X electrodes 232 and the Y electrodes 233.

The EL layers 237 may be formed of an inorganic EL material. The inorganic EL material may be at least one material selected from the group consisting of ZnS:Mn, ZnS:Tb, SrS:Ce, Ca₂S₄:Ce, SrS:Cu, SrS:Ag, CaS:Pb, and BaAl₂:Eu. The function of the inorganic EL material is the same as that of the PDP 100 illustrated in Figure 1 and thus, a detailed description thereof will be omitted.

In addition, the EL layers 237 may be formed of quantum dots. The function and structure of the quantum dots are the same as those of the quantum dots illustrated in Figure 1 and thus, a detailed description thereof will be omitted.

Since visible rays produced from phosphor layers 240 are emitted through the front substrate 220, they do not need to transmit through the EL layers 237 and so the EL layers 237 need not to be transparent. Thus, the thickness of the EL layers 237 may be greater than the EL layers 127 of the PDP 100 illustrated in Figure 1 whereby a manufacturing process is easily performed. In this case, the thickness D of the EL layers 237 may be several µm.

The EL layers 237 are disposed on a sustain discharge path between the rear dielectric layer 235 and a discharge space. Thus, the EL layers 237 are excited to emit light in the manner described with reference to PDP 100 shown in Fig.1, by the sustain voltage in discharge cells 250 to be turned on. In the discharge cells 250 to be turned off, wall charges are not generated in the discharge space and the EL layers 237 do not emit light.

A protective layer 239 can be formed on the EL layers 237 and on the front surface of the rear dielectric layer 235. The protective layer 239 prevents the rear dielectric layer 235 and the sustain discharge electrode pairs 231 from being damaged by sputtering of plasma particles, emits secondary electrons and reduces a discharge voltage and a sustain voltage. The protective layer 239 can be formed by applying magnesium oxide (MgO) on the front surface of the rear dielectric layer 235 to a thickness of about 0.2-2 µm.

The front substrate 220 is a transparent substrate through which the visible rays transmit, and is conveniently formed of a transparent glass. A plurality of address electrodes 223 are formed on a bottom surface of the front substrate 220. The address electrodes 223 extend transversely of the direction in which the sustain discharge electrode pairs 231 extend. The address electrodes 223 may be covered by front dielectric layer 225 formed on the rear surface of the front substrate 220.

Barrier ribs 227 are formed in the discharge space between the front substrate 220 and the rear substrate 230 at predetermined intervals. The barrier ribs 227 partition the discharge space so as to prevent electrical and optical interference in each of the adjacent discharge cells 250.

A discharge gas such as Ne, Xe or a mixture thereof is filled in the discharge space. The phosphor layers 240 are applied to a rear surface of the front dielectric layer 225 and side surfaces of the barrier ribs 227 which surround the discharge space, to a predetermined thickness.

In the PDP 200 having the above structure, pairs of the X and Y electrodes 232 and 233 are disposed on the same rear substrate 230 and a discharge occurs in a plane generally parallel to the rear substrate 230. As such, visible rays emitted from the phosphor layers 240 transmit through the front substrate 220 and are emitted and thus, the PDP 200 illustrated in Figure 6 is a transmitted type.

To this end, the rear dielectric layer 235 is formed on the rear substrate 230 and covers the sustain discharge electrode pairs 231. The rear dielectric layer 235 is formed of a white dielectric material so that visible rays emitted from the phosphor layers 240 in the discharge space can be reflected. The front dielectric layer 225 is formed on the rear surface of the front substrate 220 and covers the address electrodes 223. The front dielectric layer 225 is formed of a transparent dielectric material so that visible rays can transmit through the front substrate 220.

The address electrodes 223 disposed on the rear surface of the front substrate 220 are formed of a transparent conductive material, such as indium tin oxide (ITO), so that visible rays can transmit through the front substrate 220. On the contrary, the sustain discharge electrode pairs 231 disposed on the top surface of the rear substrate 230 need not to be transparent and thus may be formed of a conductive metallic material.

The address electrodes 223 are formed of ITO which is a transparent conductive material having a comparatively high resistance, as described above. Thus, in order to reduce a line resistance, narrow bus electrodes 224 formed of a metallic material having high conductivity may be coupled with the address electrodes 223, respectively.

Driving of the transmitted type PDP 200 having the above structure can be classified into driving for an address discharge and driving for a sustain discharge. The address discharge occurs between the address electrodes 223 disposed on the front substrate 220 and the Y electrodes 233 disposed on the rear substrate 230. In this case, wall charges are formed. A sustain discharge occurs due to a potential difference applied between the X electrodes 232 and the Y electrodes 233 located in the discharge space in which the wall charges are formed. The phosphor layers 240 in the discharge space are excited by UV rays generated by the discharge gas during the sustain discharge and visible rays are emitted. The visible rays from the phosphor layers 240 transmit through the front substrate 220 to provide an image that a user can recognize.

Additionally, the EL layers emit light simultaneously with the phosphor layers such that brightness of the PDP is improved and high brightness is obtained in a highly precise and fine PDP.

No significant additional power is required to drive the EL layers because the voltages used during the sustain discharge, that are applied to the X electrodes and the Y electrodes, also cause the emission of light from the EL layers, so that that the power consumption is not increased. As such, luminous efficiency of the PDP is improved.

In addition, the EL layers emit light only when they are subject to the sustain voltage for the discharge cells that are turned on and thus only emit light in cells that are switched on, so that light is not wrongly emitted.

In addition, the thickness of the phosphor layers 240 applied on the rear dielectric layer is larger than that of the phosphor layers applied on the side surfaces of the barrier ribs such that brightness of the PDP is improved and discharge stability and luminous efficiency thereof are improved.

## Claims

1. A plasma display panel comprising:
a front substrate (120, 220);
a rear substrate (130, 230) opposing the front substrate;
a plurality of discharge cells (150, 250) between the front and the rear substrates, to contain a discharge gas, each of the cells including;
a phosphor layer (140, 240) to produce light from the cell in response to radiation from the discharge gas exciting the phosphor layer;
sustain discharge electrodes (122, 123; 232, 233) to apply a sustain voltage to the discharge gas to produce the radiation to excite the phosphor layer to emit light; and **characterized in that** the plasma display panel further comprises
one or more electroluminescent EL layers (127, 237) for producing light from the cell in response to an electric current flowing through the one or more EL layers.

2. The plasma display panel of claim 1, wherein the EL layers comprise an inorganic EL material.

3. The plasma display panel of claim 1 or 2, wherein the EL layers emit light when a sustain voltage is applied to the sustain discharge electrodes.

4. The plasma display panel of any preceding claim, wherein the EL layers are formed of ZnS:Mn, ZnS:Tb, SrS:Ce, Ca₂S₄:Ce, SrS:Cu, SrS:Ag, CaS:Pb, or BaAl₂:Eu.

5. The plasma display panel of any preceding claim, wherein the EL layers have a thickness of 50 - 500nm (500-5000 Å).

6. The plasma display panel of any preceding claim, wherein the EL layers are formed of quantum dots.

7. The plasma display panel of claim 6, wherein the quantum dots comprise a core formed of CdSe, a shell formed of ZnS and surrounding the core, and caps formed of trioctylphosphine oxide (TOPO) and disposed outside the shell.

8. The plasma display panel of any preceding claim, wherein the EL layers are formed of a transparent material.

9. The plasma display panel of any preceding claim, wherein each of the cells include two EL layers that correspond to the sustain discharge electrodes respectively.

10. The plasma display panel of any preceding claim wherein the sustain electrodes are disposed on the front substrate (120).

11. The plasma display panel of claim 10 wherein the sustain electrodes are covered by a front dielectric layer (125) and said one or more EL layers (127) are disposed on the front dielectric layer.

12. The plasma display panel of claim 10 or 11 further comprising:
address electrodes (133) extending on the rear substrate to cross the sustain discharge electrodes; and
a rear dielectric layer (135) covering the address electrodes.

13. The plasma display panel of claim 10, 11 or 12, further comprising a protective layer (129) covering the EL layers and the front dielectric layer.

14. The plasma display panel of any one of claims 1 to 9 wherein the sustain discharge electrodes (232, 233) are formed on the rear substrate (230);
a rear dielectric layer (235) covers the sustain discharge electrode pairs; and
said one or more EL layers (237) are formed on the rear dielectric layer (235).

15. The plasma display panel of claim 14, further comprising:
address electrodes (223) extending on the front substrate (220) to cross the sustain discharge electrode pairs; and
a front dielectric layer (225) covering the address electrodes.

16. The plasma display panel of claim 15, further comprising a protective layer (239) covering the one or more EL layers and the rear dielectric layer.

## Patentansprüche

1. Plasmaanzeigetafel, aufweisend:
ein vorderes Substrat (120, 220);
ein hinteres Substrat (130, 230), das dem vorderen Substrat gegenüberliegt;
eine Vielzahl von Entladungszellen (150, 250) zwischen dem vorderen und dem hinteren Substrat, die ein Entladungsgas enthalten, wobei jede der Zellen aufweist:
eine Phosphorschicht (140, 240), die in Reaktion auf Strahlung vom Entladungsgas, das die Phosphorschicht anregt, Licht erzeugt;
Entladungselektroden (122, 123; 232, 233), die eine Erhaltungsspannung an das Entladungsgas anlegen, so dass die Strahlung erzeugt wird, die die Phosphorschicht anregt, so dass sie Licht emittiert; und
**dadurch gekennzeichnet, dass** die Plasmaanzeigetafel weiterhin eine oder mehrere elektrolumineszente EL-Schicht/en (127, 237) zur Erzeugung von Licht von der Zelle in Reaktion auf einen elektrischen Strom, der durch die eine oder die mehreren EL-Schicht/en fließt, aufweist.

2. Plasmaanzeigetafel nach Anspruch 1, wobei die EL-Schichten ein anorganisches EL-Material aufweisen.

3. Plasmaanzeigetafel nach Anspruch 1 oder 2, wobei die EL-Schichten Licht emittieren, wenn eine Erhaltungsspannung an die Entladungselektroden angelegt wird.

4. Plasmaanzeigetafel nach einem der vorhergehenden Ansprüche, wobei die EL-Schichten aus ZnS:Mn, ZnS:Tb, SrS:Ce, Ca₂S₄:Ce, SrS:Cu, SrS:Ag, CaS:Pb oder BaAl₂:Eu ausgebildet sind.

5. Plasmaanzeigetafel nach einem der vorhergehenden Ansprüche, wobei die EL-Schichten eine Dicke von 50 - 500nm (500 - 5000Å) aufweisen.

6. Plasmaanzeigetafel nach einem der vorhergehenden Ansprüche, wobei die EL-Schichten aus Quantenpunkten ausgebildet sind.

7. Plasmaanzeigetafel nach Anspruch 6, wobei die Quantenpunkte einen aus CdSe ausgebildeten Kern, eine aus ZnS ausgebildete Schale, die den Kern umgibt, und aus Trioctylphosphinoxid (TOPO) ausgebildete Kappen, die außerhalb der Hülle angeordnet sind, aufweisen.

8. Plasmaanzeigetafel nach einem der vorhergehenden Ansprüche, wobei die EL-Schichten aus einem transparenten Material ausgebildet sind.

9. Plasmaanzeigetafel nach einem der vorhergehenden Ansprüche, wobei jede der Zellen jeweils zwei EL-Schichten aufweist, die mit den Entladungselektroden korrespondieren.

10. Plasmaanzeigetafel nach einem der vorhergehenden Ansprüche, wobei die Entladungselektroden auf dem vorderen Substrat (120) angeordnet sind.

11. Plasmaanzeigetafel nach Anspruch 10, wobei die Entladungselektroden von einer vorderen dielektrischen Schicht (125) bedeckt werden und die besagte/n eine oder mehreren EL-Schicht/en (127) auf der vorderen dielektrischen Schicht angeordnet ist/sind.

12. Plasmaanzeigetafel nach Anspruch 10 oder 11, weiterhin aufweisend:
Adresselektroden (133), die sich auf dem hinteren Substrat erstrecken, so dass sie die Entladungselektroden kreuzen; und
eine hintere dielektrische Schicht (135), die die Adresselektroden bedeckt.

13. Plasmaanzeigetafel nach Anspruch 10, 11 oder 12, weiterhin aufweisend eine Schutzschicht (129), die die EL-Schichten und die vordere dielektrische Schicht bedeckt.

14. Plasmaanzeigetafel nach einem der Ansprüche 1 bis 19, wobei die Entladungselektroden (232, 233) auf dem hinteren Substrat (230) ausgebildet sind;
eine hintere dielektrische Schicht (235) die Entladungselektrodenpaare bedeckt; und
die besagte/n eine oder mehreren EL-Schicht/en (237) auf der hinteren dielektrischen Schicht (235) ausgebildet ist/sind.

15. Plasmaanzeigetafel nach Anspruch 14, weiterhin aufweisend:
Adresselektroden (223), die sich auf dem vorderen Substrat (220) erstrecken, so dass sie die Entladungselektrodenpaare kreuzen; und
eine vordere dielektrische Schicht (225), die die Adresselektroden bedeckt.

16. Plasmaanzeigetafel nach Anspruch 15, weiterhin aufweisend eine Schutzschicht (239), die die eine oder mehreren EL-Schicht/en und die hintere dielektrische Schicht bedeckt.

## Revendications

1. Écran d'affichage à plasma comprenant :
un substrat avant (120, 220) ;
un substrat arrière (130, 230) en face du substrat avant ;
une pluralité de cellules (150, 250) de décharge entre le substrat avant et le substrat arrière, pour contenir un gaz à décharge, chacune des cellules incluant ;
une couche (140, 240) de luminophore pour produire de la lumière à partir de la cellule en réponse à un rayonnement provenant du gaz à décharge excitant la couche de luminophore ;
des électrodes (122, 123 ; 232, 233) de maintien de décharge pour appliquer une tension de maintien au gaz à décharge pour produire le rayonnement pour exciter la couche de luminophore pour émettre de la lumière ; et
**caractérisé en ce que** l'écran d'affichage à plasma comprend en outre une ou plusieurs couches (127, 237) électroluminescentes (EL pour "ElectroLuminescent") destinées à produire de la lumière à partir de la cellule en réponse à un courant électrique passant à travers les une ou plusieurs couches EL.

2. Écran d'affichage à plasma selon la revendication 1, dans lequel les couches EL comprennent une matière EL inorganique.

3. Écran d'affichage à plasma selon la revendication 1 ou 2, dans lequel les couches EL émettent de la lumière lorsqu'une tension de maintien est appliquée aux électrodes de maintien de décharge.

4. Écran d'affichage à plasma selon l'une quelconque des revendications précédentes, dans lequel les couches EL sont formées de ZnS:Mn, ZnS:Tb, SrS:Ce, Ca₂S₄:Ce, SrS:Cu, SrS:Ag, CaS:Pb ou BaAl₂:Eu.

5. Écran d'affichage à plasma selon l'une quelconque des revendications précédentes, dans lequel les couches EL ont une épaisseur de 50 à 500 nm (500 à 5000 Å).

6. Écran d'affichage à plasma selon l'une quelconque des revendications précédentes, dans lequel les couches EL sont formées de points quantiques.

7. Écran d'affichage à plasma selon la revendication 6, dans lequel les points quantiques comprennent un noyau formé de CdSe, une enveloppe formée de ZnS et entourant le noyau, et de capsules formées d'oxyde de trioctylphosphine (TOPO pour " TriOctylPhosphine Oxide") et disposées à l'extérieur de l'enveloppe.

8. Écran d'affichage à plasma selon l'une quelconque des revendications précédentes, dans lequel les couches EL sont formées d'une matière transparente.

9. Écran d'affichage à plasma selon l'une quelconque des revendications précédentes, dans lequel chacune des cellules inclut deux couches EL qui correspondent respectivement aux électrodes de maintien de décharge.

10. Écran d'affichage à plasma selon l'une quelconque des revendications précédentes, dans lequel les électrodes de maintien sont disposées sur le substrat avant (120).

11. Écran d'affichage à plasma selon la revendication 10, dans lequel les électrodes de maintien sont couvertes par une couche diélectrique avant (125) et dans lequel lesdites une ou plusieurs couches EL (127) sont disposées sur la couche diélectrique avant.

12. Écran d'affichage à plasma selon la revendication 10 ou 11, comprenant en outre :
des électrodes (133) d'adressage s'étendant sur le substrat arrière pour croiser les électrodes de maintien de décharge ; et
une couche diélectrique arrière (135) couvrant les électrodes d'adressage.

13. Écran d'affichage à plasma selon la revendication 10, 11 ou 12, comprenant en outre une couche (129) de protection couvrant les couches EL et la couche diélectrique avant.

14. Écran d'affichage à plasma selon l'une quelconque des revendications 1 à 9, dans lequel les électrodes (232, 233) de maintien de décharge sont formées sur le substrat arrière (230) ;
dans lequel une couche diélectrique arrière (235) couvre les paires d'électrodes de maintien de décharge ; et
dans lequel lesdites une ou plusieurs couches EL (237) sont formées sur la couche diélectrique arrière (235).

15. Écran d'affichage à plasma selon la revendication 14, comprenant en outre :
des électrodes (233) d'adressage s'étendant sur le substrat avant (220) pour croiser les paires d'électrodes de maintien de décharge ; et
une couche diélectrique avant (225) couvrant les électrodes d'adressage.

16. Écran d'affichage à plasma selon la revendication 15, comprenant en outre une couche (239) de protection couvrant les une ou plusieurs couches EL et la couche diélectrique arrière.
